# EUROPEAN PATENT SPECIFICATION

(11) **EP 0 425 309 B1**
(45) Date of publication and mention of the grant of the patent: **05.02.1997**
(21) Application number: 90311770.3
(22) Date of filing: 26.10.1990
(51) Int. Cl.: H01S 3/102, H01S 3/131, H01S 3/04, A61F 9/00

(54) **Electronically pulsed laser system**
Elektronisch gepulstes Lasersystem
Système laser pulsé électroniquement

(30) Priority: 27.10.1989 US 428169
(43) Date of publication of application: 02.05.1991
(73) Proprietor: Coherent, Inc., Palo Alto California 94304 (US)
(72) Inventor: Rorden, Robert J., Los Altos, California 94022 (US); Keenan, Peter, Los Altos, California 94024 (US); Thedick, Hank, Jacksonville, Florida 32205 (US)
(74) Representative: Jackson, David Spence

(56) References cited:
- EP-A- 0 116 874
- EP-A- 0 164 751
- PATENT ABSTRACTS OF JAPAN vol. 5, no. 30 (E-47)(702) 24 February 1981 & JP- A-55 156 379
- PATENT ABSTRACTS OF JAPAN vol. 12, no. 89 (E-592)(2936) 23 March 1988 & JP- A-62 224 091

## Description

This invention relates to a pulsed laser system, including a laser; a controlled power supply means coupled to the laser to supply a controlled pulse of power thereto such that the laser produces an output beam pulse in response thereto; control means coupled to the controlled power supply means for supplying control signals thereto, the controlled power supply means being such as to generate pulses of power in response to and of a duration determined by the control signals; and means for generating an analog signal representative of beam power output by the laser.

It is conventional to employ continuous wave laser systems for ophthalmic surgery and other medical applications. However, conventional continuous wave laser systems have produced large amounts of waste heat when used in such applications, and for this reason have employed external cooling water supplies (or other external cooling means) to dissipate waste heat.

Some conventional continuous wave laser systems have employed mechanical shuttering devices in the laser beam path to convert the laser output beam mechanically into a pulsed output beam. However, such mechanical shuttering devices are slow. Furthermore, such mechanical shuttering devices typically produce audible clicking noises whenever the user actuates the system, which undesirably tends to cause the patient being treated to flinch.

One conventional continuous wave laser system used for medical applications (such as photocoagulation) in operating rooms is air-cooled and portable. However, this system uses blowers to push hot air into the operating room which often makes the room uncomfortably hot.

EP-A-0164751 describes a pulsed laser system of the kind defined hereinbefore at the beginning in which the controlled power supply means includes a ferroresonant transformer circuit having a first pair of primary coils coupled to constant d.c. input terminals through a series switch, and a second pair of primary windings, oppositely wound relative to the first pair, and directly connected across the constant d.c. input terminals. The transformer has a pair of series connected secondary windings that are coupled to three parallel power transistor output circuits to provide them with a variable width pulse in response to pulsed control signals applied to the switch in the primary circuit. The secondary windings are coupled to the bases and emitters of the three power transistors. The collectors of the three transistors are connected together at a point that is coupled to the cathode of the laser, which is an argon laser. The laser tube, the parallel collector-emitter paths through the transistors, and a d.c. voltage source capable of providing a current of 100 amps are connected in series with one another. The control means comprises a control panel, a microprocessor-controller, a counter circuit, and a hardware limiter. In response to operator commands and mode selection entered at the control panel, the microprocessor-controller automatically determines the required pulse width by setting a first counter in the counter circuit, and the required pulse repetition rate by setting a second counter in the counter circuit. The hardware limiter circuit limits the maximum pulse width to 120 microseconds and the maximum pulse repetition rate to 3000 per second. The means for generating an analog signal representative of beam power output by the laser is a photocell arranged to receive a fraction of the beam split off by a beam splitter. The average power delivered during a treatment, such as coagulation or perforation, is determined from the voltage output from the photocell during the treatment.

According to the present invention, a pulsed laser system of the kind defined hereinbefore in the beginning is characterised in that the controlled power supply means includes analog feedback means for controlling, independently of the said duration, the amplitude of each pulse of power supplied to the laser, in response to the said analog signal and a control signal from the control means.

A preferred embodiment of the invention includes a laser and a power supply including means for modulating the power supplied to the laser in order to generate a pulsed laser output beam having pulse amplitude, shape, and duration matching pre-selected parameters. The system's electronically pulsed operating mode reduces the amount of heat generated during system operation, so that the system is operable with a self-contained, internal water-cooling means. In one preferred embodiment, the invention employs an argon laser tube capable of generating between 6 and 7 kilowatts of heat at full CW power, but which generates only 2.5 kilowatts of average power during the electronically pulsed operating mode of the invention.

The electronic switching circuitrv used to pulse the output beam is silent, and is much faster (i.e., results in much shorter pulse rise times and fall times) than mechanical beam chopping means. In one preferred embodiment, the pulse rise time is about one half millisecond and the pulse fall time is much shorter than one half millisecond.

Feedback from the output beam is processed in the power supply control means, in order to stabilize system operation. If the measured output power does not match the expected value, the current to the laser is modified. If the measured output power exceeds the expected value by more than a selected amount (i.e., 20%), the entire system automatically shuts down.

A redundant safety means preferably employs a single beam pickoff unit to extract two sample beams from the output beam. One of the sample beams is received by the power supply control means for processing. The other sample beam is received by a safety circuit which independently monitors it (and other system operating parameters) for indications of unsafe conditions.

The preferred embodiment of the invention is particularly suitable for use in ophthalmic and surgical applications, but is also useful for other applications.

The invention will now be described by way of example with reference to the accompanying drawings, in which:-
Figure 1 is a schematic diagram of a preferred embodiment of the invention.
Figure 2 is a block diagram of the control unit of the Figure 1 embodiment.
Figure 3 is a block diagram of the DC power supply of the Figure 1 embodiment.
Figure 4 is a simplified view of a portion of the optical subsystem of the Figure 1 embodiment.

### Detailed Description of the Preferred Embodiments

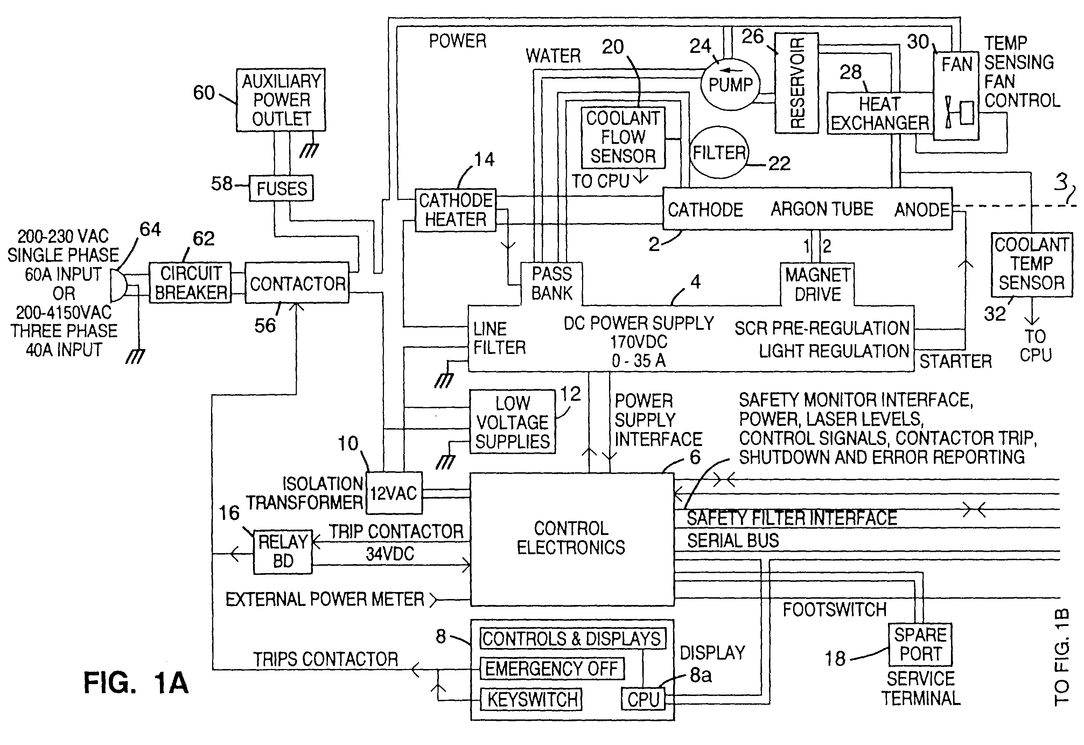

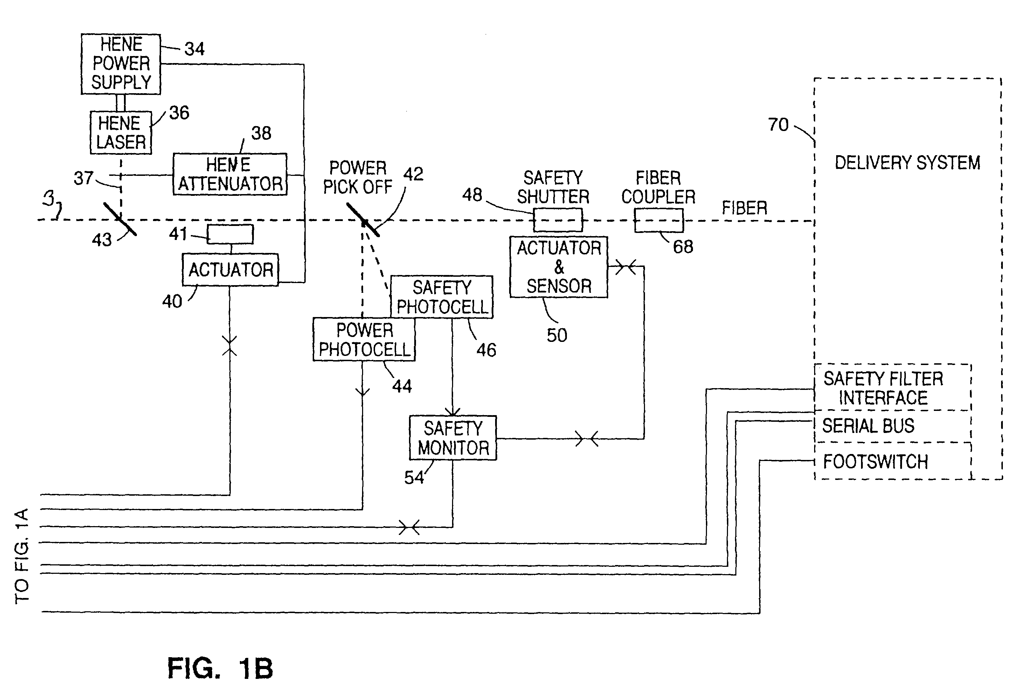

A preferred embodiment of the system of the invention will be described with reference to Figures 1, 2, and 3. The system of Figure 1 includes a ceramic/tungsten argon laser tube 2, which emits an output beam 3 when appropriately powered. Beam 3 has a principal portion of its power spectrum within the wavelength range of from 488 to 514 nanometers. In response to a control signal (sometimes referred to as a "Green Only" filter signal) from control unit 6 (to be discussed below), actuator 40 generates a control signal causing filter 41 to be automatically positioned in the path of beam 3. When positioned in the path of beam 3, filter 41 passes the longer (green) wavelengths of beam 3 and blocks most of the shorter (blue) wavelengths.

In alternative embodiments, any of a variety of laser media may be substituted for the argon laser tube 2 employed in the Figure 1 embodiment. The invention may include a laser capable of continuous wave ("CW") operation, or a laser (for example, a diode laser) not capable of CW operation.

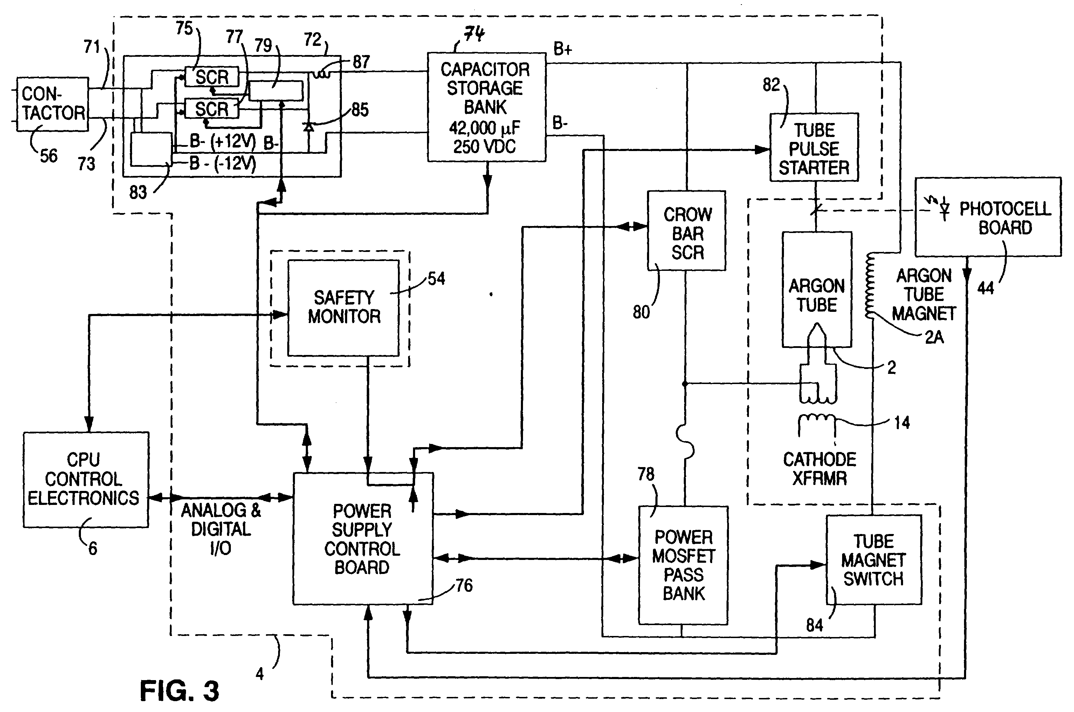

DC laser power supply 4 (FiG. 3) supplies high voltage power to laser tube 2, in response to electric control signals from control circuit 6. In response to each control signal, power supply 4 supplies power to tube 2 for a time sufficient to cause tube 2 to emit a pulse of desired duration. Power supply 4 includes a MOSFET passbank (78) which supplies the tube current to tube 2, a tube start circuit (or "tube pulse starter") (82) for providing a high voltage pulse to the anode of tube 2 sufficient to ionize the medium within the tube, a magnet control circuit (84) for controlling the magnet 2A surrounding tube 2, and a crowbar circuit (80) for providing a very fast shutdown of tube 2 by enabling a low impedance path for current in parallel with the tube. Power supply 4 will be discussed in greater detail below with reference to Fig. 3.

Although a preferred embodiment of the invention is described herein with reference to a DC power supply 4, in other embodiments of the invention power supply 4 may be replaced by another type of power supply (such as an AC power supply). The power supply employed in the inventive system need not include a MOSFET passbank (as in a preferred embodiment of the invention), but must be capable of modulating power to the laser (in response to control signals) to cause the laser to emit an output pulse having amplitude, shape, and duration matching pre-selected parameters.

A preferred embodiment of the inventive system (including DC power supply 4) is powered by AC power supply 64, which is either of the single phase type (preferably using 208-230 VAC, at 50-60 Hz) or the three phase type (preferably using 195-250 VAC or 380-415 VAC). Power supply 64 is electrically connected to circuit breaker 62 (preferably a 40 amp circuit breaker, for use with a single phase, 208-230 VAC power supply), main contactor 56, relay board 16 (which provides 34 VDC power to control unit 6), isolation transformer 10 (which provides 12 VAC power to control unit 6), low voltage power supply 12, DC power supply 4, cathode heater 14, cooling system pump 24, cooling system fan 30, and through fuses 58 to auxiliary power outlet 60.

Cathode heater 14 preferably includes a ferro-resonant filament transformer whose primary winding is connected to contactor 56, and whose secondary winding supplies a lower AC voltage (typically 3 VAC, at 25 amps) to the cathode of tube 2. Low voltage power supply 12 preferably supplies regulated +5 VDC, 12 VDC, +15 VDC, and -15 VDC power (referenced to chassis ground) to control unit 6, which in turn distributes them throughout the system. Contactor circuit 56 will disconnect AC power source 64 from the rest of the system in response to an appropriate command sent to contactor circuit 56 from display unit 8 in response to actuation of a keyswitch on display unit 8 by the system operator, or through relay board 16 to contactor circuit 56 from control unit 6 (in which it is generated automatically upon reception of hazard signals from one or more of the system's sensors, including sensors 20, 32, 44, and 46).

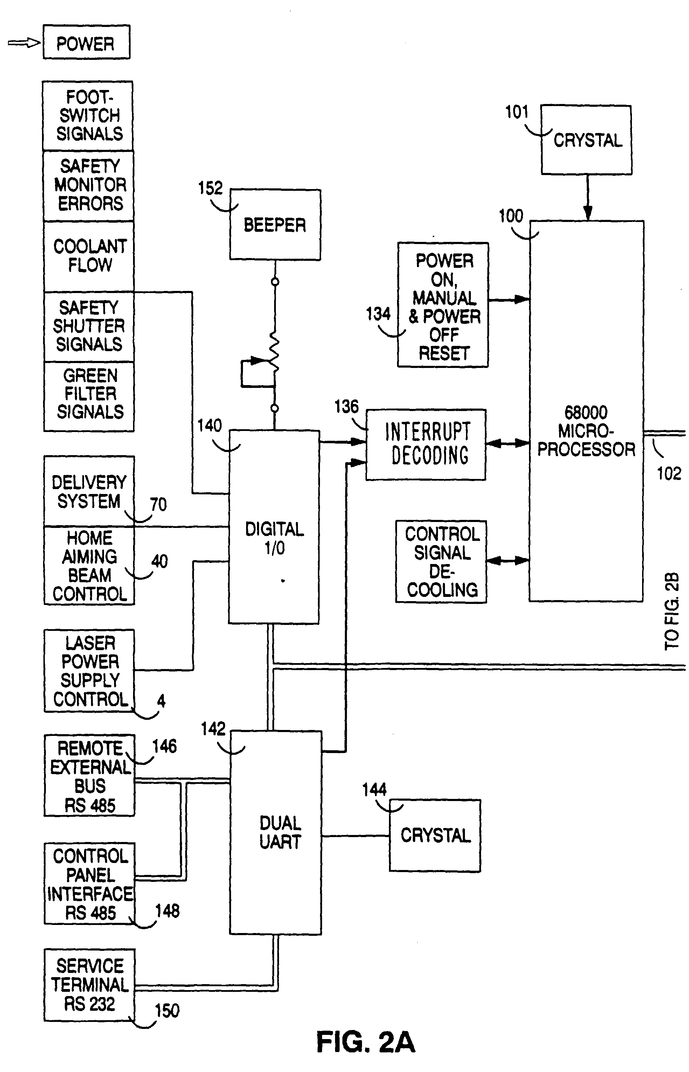

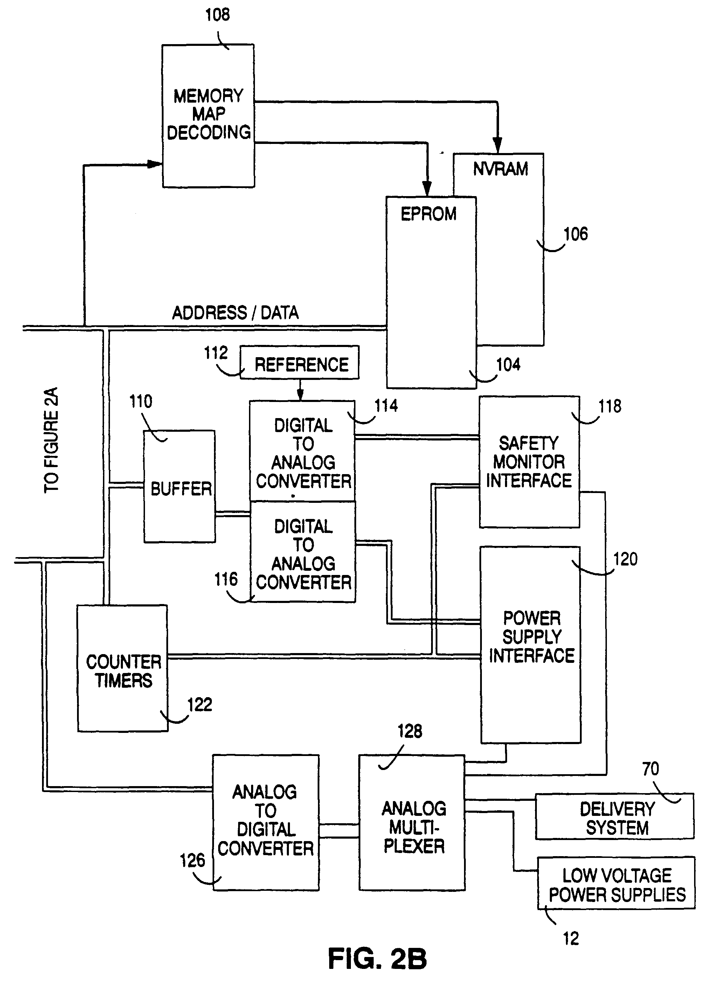

Pump 24 circulates water (or other coolant fluid) within the system's closed coolant loop. The water circulates through the MOSFET passbank within power supply 4, and then through coolant filter 22, laser tube 2, heat exchanger 28 and reservoir 26. Fan 30 forces air through heat exchanger 28, and then out from the system through a vent (not shown), to remove heat transferred to the coolant water from tube 2 and the MOSFET passbank. The speed of fan 30 is controlled in response to signals (preferably generated by a temperature sensor, not shown, within heat exchanger 28) indicative of air temperature within heat exchanger 28. Sensors 20 and 32 generate signals indicative of coolant fluid flow rate and temperature, respectively, and supply these signals to a CPU 100 (shown in Fig. 2) within control unit 6 for use in generating control signals for disabling the system upon occurrence of specified flow and temperature conditions. In a preferred embodiment, if sensor 32 indicates a coolant flow temperature outside the range from zero degrees to +65 degrees Celsius, or if sensor 20 indicates a coolant flow rate of less than 0.5 gpm, control unit 6 will disable the laser and cause display unit 8 to display appropriate error messages.

The system is capable of operating without external coolant water flow due to the electronically pulsed manner in which tube 2 is operated. Tube 2 is driven into its ionized state (and maintained in such state) in response to finite duration control pulses, which are supplied (from control means to be described) to the MOSFET passbank within power supply 4. No tube current flows between such pulses, and therefore, much less heat is generated than in conventional laser systems in which tube current is supplied continuously to the laser medium.

Control unit 6 provides overall system control, and includes a "68000" microprocessor (available from Motorola), EPROM and RAM circuits, analog-to-digital and digital-to-analog conversion circuits, counters/timers, a watchdog timer, RS232 and RS485 ports, and digital input/output circuitry. The microprocessor executes a set of software instructions, permanently stored in ROM, to monitor system performance and safely operate the laser in response to operator inputs. Control circuit 6 will be described in greater detail below with reference to Figure 2.

Display unit 8 is connected with control unit 6 by a serial communication link (preferably an RS485 link, in which case unit 8 includes an RS485 port). Unit 8 includes a front panel for mounting various system operator controls and indicators, an "8032" microprocessor (CPU 8a in Fig. 1), a ROM circuit, and circuitry for interfacing the microprocessor with the front panel controls and indicators. The ROM within display unit 8 is preferably programmed to oversee three functions: communication with control unit 6, maintenance of displayed information (such as power level, patient exposure time, status lights, and the like), and detection of operator inputs (such as "standby" or "ready" operating mode commands, power increase or decrease commands, patient exposure settings, and the like).

Helium-neon laser 36, powered by power supply 34, provides an HeNe aiming beam 37 for use in aiming the output beam 3 from laser 2. Aiming beam 37 is directed by folding mirror 43 so that it joins the portion of beam 3 that has propagated (toward the right) through mirror 43. A remotely controllable beam attenuator 38 is mounted in the path of beam 37 between laser 36 and mirror 43. Attenuator 38 may be actuated by a control signal from unit 40 in order to attenuate beam 37.

To conserve power, HeNe beam 37 may be directed into optical fiber mount 68 when power supply 4 is off (i.e., in the absence of beam 3), in order to align the system's optical components without consuming power in laser 2 and power supply 4. Use of HeNe beam 37 with argon laser output beam 3 also has the advantage of permitting use of a fixed eye safety filter within delivery system 70 (rather than a moveable eye safety filter which must be moved into and out of the beam path during different operating modes of the system).

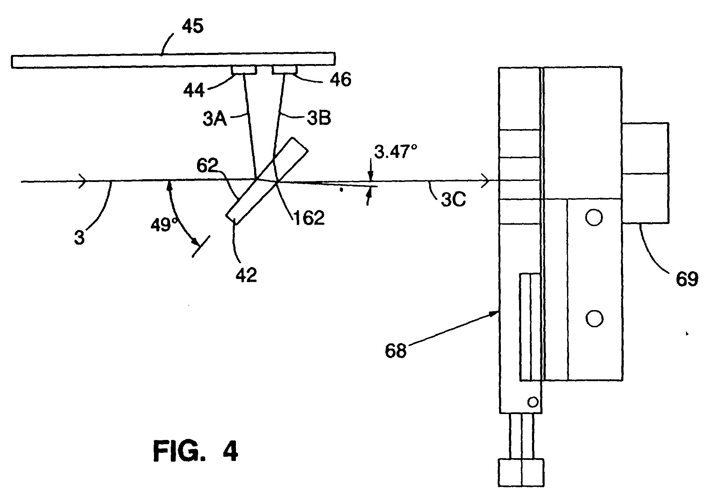

The combined beam (which includes energy from beam 37 as well as beam 3, but is referred to below as beam 3 for simplicity) propagates through beam sampling means 42, past safety shutter 48, and then to delivery system 70 including an optical fiber mount 68 (best shown in Fig. 4) for coupling the beam into optical fiber 69 (shown in Fig. 4).

Beam sampling means 42 may include any of a variety of means for diverting two portions of the combined beam to photosensors 44 and 46. For example, beam sampling means 42 may consist of a pair of partially reflective elements, each for reflecting a beam portion to one of photosensors 44 and 46. As shown in Figure 4, beam sampling means 42 is a preferably a wedge-shaped beamsplitter, having a front surface 62 (preferably oriented at an angle substantially equal to 49 degrees with respect to incoming beam 3), and a rear surface 162 (preferably oriented at an angle slightly greater than 49 degrees with respect to incoming beam 3). A portion 3A of beam 3 reflects from surface 62 and propagates to power photocell 44 (mounted on base 45). Portion 3B of beam 3 is reflected from rear surface 162 and is then refracted at surface 62 as it propagates out from within the wedge-shaped beamsplitter 42 through surface 62 toward safety photocell 46 (mounted on base 45). The remaining portion 3C of incoming beam 3 is transmitted by beamsplitter 42, entering at surface 62, and emerging from surface 162 of beamsplitter 42 at a small angle (in the Figure 1 embodiment, substantially equal to 3.47 degrees) with respect to incoming beam 3, and then propagates to optical fiber mount 68 which delivers the beam to optical fiber 69.

The output signal from photocell 44, indicative of output beam power, is supplied to control unit 6 (as shown in Fig. 1) and/or directly to control circuitry within DC power supply 4 (as shown in Fig. 3), in which it is processed to generate system error and control signals. Similarly, the output signal from photocell 46, indicative of output beam power, is supplied to safety monitor 54 in which it is processed to generate system error and control signals. Control unit 6 also receives other system sensor signals such as the output of sensors 20 and 32.

If wedge-shaped beamsplitter 42 becomes misaligned or is removed altogether (for example accidentally, as the result of damage to the system) then beam 3 will be incident at a different location on fiber mount 68 than when beamsplitter 42 is properly aligned as shown in Figure 4. By appropriately designing mount 68 (i.e., by designing it to have a sufficiently small aperture), beam 3 may thus be prevented from entering fiber 69 when beamsplitter 42 is misaligned or absent. This is desirable because safety monitor 54 and control unit 6 will not operate as intended (and will not prevent unsafe operating conditions in all cases) in the absence of beam sample signals from photodetectors 44 and 46.

In a preferred embodiment, the system's sensor signal processing and error and control signal generation is distributed, with some of such operations being performed in safety monitor circuit 54. For example, in a preferred embodiment, monitor 54 receives a sensor signal (from a sensor, not shown, in actuator and sensor unit 50) which indicates whether safety shutter 48 is open or closed, and the output beam power signal from sensor 46 is also routed to monitor 54. When measuring and logic circuitry within monitor 54 determines that the output beam power exceeds the level requested by the operator (or set by the control electronics 6 for self testing of monitor 54), monitor 54 will generate signals to shut down the laser, close the safety shutter, and display an error message on the display. The primary shutdown method is to turn off the laser current by means of power MOSFET passbank 78. A redundant shutdown means is provided by crowbar circuit 80 within power supply 4, which diverts current from the laser. This assures laser shutdown even if the power MOSFET passbank 78 is faulty (short circuit).

The logic circuitry within monitor 54 also turns off the main AC power source by means of contactor 56 if laser output is detected with safety shutter 48 open with no exposure signal from the footswitch. It also turns off contactor 56 if a very large laser output (i.e., greater than 3.95 watts) occurs.

Monitor 54 is preferably tested by control electronics 6 during a start up self test program. This is done with safety shutter 48 closed.

Laser output power and time values sent by control electronics 6 to DC power supply 4 and monitor 54 are adjusted to cause activation of the shutdown system.

A preferred embodiment of control unit 6 will next be described with reference to Figure 2. Microprocessor 100 (preferably a 68000 integrated circuit available from Motorola) communicates via bus 102 with the control unit's memory circuits, EPROM 104 and non-volatile RAM ("NVRAM") 106, and other control unit components. Memory map decoding circuit 108 provides decoding and timing signals for memory circuits 104 and 106. Microprocessor 100 receives clock pulses from crystal clock 101 and externally generated commands (such as "power off" and "power on" commands 134 supplied by the system operator, and commands from interrupt decoding circuit 136 supplied through digital I/O circuit 140), and executes a set of software instructions, permanently stored in EPROM 104 in order to monitor system performance and safely operate the laser. Preferably, circuit 106 has an internal lithium battery to retain data even when the system's power is turned off.

Digital signals from microprocessor ioo are routed via bus 102 to digital I/O circuit 140, or via bus 102 through buffer 110 to digital-to-analog converters 114 and 116. D-to-A converter 116 converts digital control signals (indicative of the output power level the laser is being requested to provide) into the analog form in which they are supplied through power supply interface 120 to power supply 4, and to safety monitor 54. D-to-A converter 114 converts digital control signals (indicative of the output power level the laser is being requested to provide) into the analog form in which they are supplied through safety monitor interface 118 to safety monitor 54. Reference voltage source 112 provides a DC reference voltage (preferably -10V) to D-to-A converters 114 and 116. During normal operation, converters 114 and 116 receive identical signals, but during a self-check mode (which preferably is entered automatically each time the system is powered up) they may receive unequal values.

Analog-to-digital converter 126 receives multiplexed analog signals from safety monitor 54 and delivery system 70 (through interface 118 and multiplexer 128), and converts them to digital form for transmission on bus 102.

Counter/timer circuit 122 preferably includes at least two Z8536 integrated circuits. One Z8536 is used to generate an "Exposure time" signal, whose value is determined by parameters loaded by microprocessor 100 into the timers therein, and which is sent to laser power supply 4 through interface 120. A second Z8536 is used to generate a "Safety monitor exposure timer" signal, whose value is determined by parameters loaded by microprocessor 100 into the timers therein, and which is sent to safety monitor 54 through interface 118 (in which it is used to generate overtime and undertime fault signals, and as an enable to other safety circuitry within monitor 54).

Digital I/O circuit 140 preferably includes three Z8536 integrated circuits, each of which includes twenty-two input/output ports. Each of the ports may be independently configured by commands from microprocessor 100 to operate as an input port, an output port, or a bidirectional port, and in any of a variety of modes. In a preferred embodiment, a single set of three Z8536 integrated circuits serves as both circuit 122 and circuit 140.

For example, in one embodiment, a first of the Z8536 circuits includes ports configured as follows: input ports for monitoring the status of a "service mode" switch (which may be closed by the system operator to initiate a mode in which the system may more readily be serviced) and a "diagnostic mode" switch (which may be closed by the system operator to initiate a self test mode of the system), an output port connected to main contactor 56 for tripping that contactor in response to a command from microprocessor 100, an input port for monitoring a crowbar circuit status signal from power supply 4, an output port connected to power supply 4 for commanding power supply 4 to begin to ramp up the tube voltage in preparation for a tube start, an output port connected to power supply 4 for activating the tube starter circuit within power supply 4, an output port connected to power supply 4 for activating the crowbar circuit within power supply 4, an input port for monitoring the status of the sensor within actuator and sensor unit 50 (which sensor indicates whether safety shutter 48 is connected to its DC power supply, and accordingly whether shutter 48 is open or closed), an output port connected to safety monitor 54 for commanding monitor 54 to simulate the pressing of a footswitch in delivery system 70, and output port for sending an enable signal to D-to-A converters 114 and 116, an output port connected to power supply 4 for activating the tube magnet circuit within power supply 4, and an output port connected to power supply 4 for generating a precisely timed pulse indicative of the beginning, duration, an end of an exposure (i.e., an exposure of a patient to the laser output beam through delivery system 70).

The second of the Z8536 circuits preferably includes ports configured as follows: an input port for monitoring the status of a zero crossing detection means (within power supply 4) which generates a pulse each time the AC power signal from the AC power supply crosses zero volts (for use in synchronizing the exposure control signals sent to MOSFET passbank 78 within laser power supply 4), an input port for monitoring the status of A-to-D converter 126, an input port for monitoring the status of actuator 40, an output port connected to delivery system 70 for supplying a control signal thereto to activate a doctor's eye safety filter therein prior to a patient exposure to laser output beam 3, an input port for monitoring the status of the eye safety filter within delivery system 70, an output port for supplying signals for rotating a polarizing filter in the path of HeNe beam 37 (in an embodiment including such a polarizing filter), an output port for supplying an on/off signal to actuator 40 for controlling HeNe laser power supply 34, and an output port connected to safety monitor 54 for generating a precisely timed pulse indicative of the beginning, duration, and end of a patient exposure.

The third of the Z8536 circuits preferably includes ports configured as follows: an output port for supplying voltage pulses to beeper circuit 152 (for driving an audio amplifier and loudspeaker therein), an output port for enabling/disabling the DC supply voltage (preferably 12VDC) to actuator 50 for enabling/disabling the safety shutter 48, an input port for monitoring the status of safety shutter 48, an input port for monitoring the status of an operator-actuatable footswitch within delivery system 70, an output port for supplying enable pulses to analog multiplexer 128, an output port for supplying control signals to actuator 40 for operating filter 41, and input port for monitoring the status of filter 41, and input port for monitoring the status of a coolant flow sensor in the closed-loop coolant flow circuit (which will signal loss of coolant flow, calling for laser shutdown), and output ports for selecting one or more of the analog inputs to multiplexer 128.

In a preferred embodiment, display unit 8 communicates with control unit 6 via an RS485 bus including UART 142 and RS485 port 148. Control unit 6 serves as the bus master and CPU 8a within display unit 8 serves as the bus slave. In a preferred embodiment in which CPU 8a is an 8032 microprocessor, CPU 8a includes an internal UART for interfacing the relatively slow speed bus with the high speed microcontroller circuitry within CPU 8a.

UART 142 utilizes a clock signal generated by crystal clock device 144, also handles signal flow between CPU 100 and RS485 port 146 (for communicating with a peripheral device external to control unit 6), and between CPU 100 and RS232 port 150 (for communicating with a service terminal).

A preferred embodiment of DC power supply 4 will next be described with reference to Fig. 3. The Fig. 3 embodiment is designed for use in the case that single phase 208-230 VAC power is supplied thereto from AC power supply 64 through contactor 56. Power supply 4 develops a DC voltage (the B+/B- voltage across the output terminals of capacitor storage bank 74) for powering laser tube 2, and includes means for triggering the ionization of tube 2, and maintaining tube 2 at a desired laser output beam power level for a specified exposure period in response to digital and analog control signals from control unit 6 (and laser beam output power feedback signals). By starting laser tube 2 at the beginning of each exposure, and turning it off between exposures, the time-averaged amount of heat generated by the laser tube is greatly reduced (in comparison with the case that the laser is powered continuously).

Semiconductor controlled rectifiers ("SCRs") 75 and 77 within SCR preregulation unit 72 are connected in series with active AC input lines 71 and 73, respectively, from contactor 56. The B+/B- voltage is developed by phase angle controlled firing of SCRs 75 and 77 into a set of capacitors designated as capacitor storage bank 74. Preferably, bank 74 includes three 14,000 microfarad capacitors connected in parallel. Between exposures, voltage B+ is maintained at 155 VDC. At tube start time, voltage B+ is ramped up to 170 VDC and, during the exposure, is maintained at a fixed level (preferably 12 VDC) above the actual tube voltage.

During each half cycle in which the high voltage AC input to SCR 75 within preregulator 72 is positive with respect to the high voltage AC input to SCR 77, a diode within SCR circuit 77 conducts (thus passing negative line voltage to the B- line), the gate of SCR 77 remains off during the entire half cycle, and firing control circuit 79 is enabled to fire the gate of SCR circuit 75 at any time during the half cycle (as necessary to supply the B+ capacitors). During the next half cycle, the roles of SCRs 75 and 77 are reversed, with the gate of SCR 75 off and firing enabled to SCR 77. Firing control circuit 79 within circuit 76 alternately fires SCRs 75 and 77 within SCR preregulator 72 to maintain the B+ voltage at 155 VDC between exposures, to ramp voltage B+ up to 170 VDC from 155 VDC at tube start time, and to maintain the B+ voltage at a fixed level (preferably 12 VDC) above the actual tube voltage during the exposure.

Preferably, firing control circuit 79 within circuit 72 includes a pair of transformers, each having its secondary connected to one of SCRs 75 and 77, and a circuit for supplying triggering pulses to the primary of each transformer. Each triggering pulse generation circuit preferably includes an LM556 integrated circuit whose RST input is driven high (to cause generation of a triggering pulse) or low, in response to control signals from control unit 6 and the output of a zero crossing detection circuit (not shown).

Preregulator 72 also includes power supply 83, diode 85, and inductor 87. Power supply 83 is connected across input lines 71 and 73, and outputs DC voltage signals having magnitude (B-), (B-)-(12 volts), and (B-)+(12 volts). Inductor 87 filters the positive AC half cycles passed by SCRs 75 and 77 to capacitor bank 74. Diode 85 serves as a swing back diode, allowing inductor 87 to dump stored energy into capacitor bank 74 when both SCRs 75 and 77 are off. The voltage across capacitor bank 74 is the B+ supply voltage.

In normal operation, a light control signal (to be described below) is used to maintain the current through tube 2 at whatever level is required to provide the output beam power requested at display unit 8. The current is controlled by controlling the conduction of four parallel MOSFETs within MOSFET passbank 78 in series with tube 2 (between the tube and the B- terminal). Control unit 6 supplies an analog voltage to control circuitry 76 within power supply 4, representing the level of power requested (typically, within the range from about 50 mwatts to about 2.5 watts). Power sensor 44 provides circuitry 76 with a feedback signal proportional to actual output beam power. The output of sensor 44 is calibrated to provide the same range of voltages as the analog power request voltage from control unit 6. Control circuitry 76 increases or decreases the conduction of the MOSFETs within bank 78 to make the feedback voltage from sensor 44 match the power request voltage.

In one preferred embodiment, circuitry 76 also operates in a current control mode (in which the system may more readily be serviced) in which it sets the MOSFET conduction to provide a constant tube current.

In an embodiment in which AC power supply 64 generates a three phase signal, we prefer that DC power supply 4 include a full wave bridge rectifier and a set of in-line FETs (field effect transistors) to develop the B+ voltage from the three phase AC power signal.

The tube magnet 2a, connected directly to the B+ terminal of storage bank 74, is turned on by magnet switch 84 (in response to a control signal from circuit 76) at a time three AC power zero crossings before each exposure, and is turned off at the end of the exposure (unless B+ exceeds 155 VDC, in which case magnet 2a is kept on to drain the capacitors back down to the 155 VDC level, at which point the magnet is turned off).

Cathode heater 14 preferably includes a ferroresonant filament transformer whose primary winding is connected to power supply 64, and whose secondary winding is connected to MOSFET passbank 78 and to the cathode of tube 2. The filament transformer automatically adjusts to a wide range of AC supply voltages to provide selected AC power (typically 3 VAC, at 25 amps) to the cathode of tube 2, without the need for retapping the transformer upon installation. In response to a control signal from circuit 76, tube pulse starter 82 initiates current flow through tube 2.

The zero crossing detection circuit (not shown) within SCR preregulator 72 provides circuit 76 with a signal indicating the start of each zero crossing of the AC power supply. Circuit 76 employs this zero crossing signal to time its requests for power and B+ ramp up so that each such request begins at a zero crossing.

All logic and analog voltages sent to, or which leave from, power supply 4 are referenced to digital or analog ground. Circuits within power supply 4 which are referenced to digital or analog ground use DC operating voltages from "+/-15 VDC and +5 VDC" power supply 12 (connected to control unit 6), which reach power supply 4 through control unit 6. Other circuits within power supply 4 operate on +/-12 VDC, referenced to the voltage B-. Opto-isolators are used to exchange signals between circuits referenced to analog or digital ground, and those referenced to B-.

Crowbar circuit 80, which responds to commands from both safety monitor 54 and control circuitry 76, is capable of rapidly terminating an exposure by enabling a very low resistance shunt path around tube 2.

A passbank drive circuit within control circuitry 76 generates a control signal (referenced to signal B-), and sends the control signal to four amplifiers which control the gate voltage to the MOSFETs within passbank 78. The control signal is generated in response to the feedback power signal from power sensor 44 and represents the tube current required to make the laser output power match the beam power level requested by the system operator (so that, for example, the control signal will tend to decrease the tube current if the measured output beam power exceeds the operator-requested beam power level). Each amplifier output drives the gate of one of the four MOSFETs which are connected in parallel within passbank 78. The MOSFET conduction determines the current through tube 2, with each of the four MOSFETs passing one fourth of the total tube current.

Tube pulse starter circuit 82 provides a high voltage pulse to the tube anode sufficient to ionize the tube. Preferably, circuit 82 includes a transformer, an FET, and a capacitor. The FET is turned on to discharge the capacitor through the primary of the transformer. Upon discharge of the capacitor, a large DC voltage is induced in the secondary of the transformer. The secondary is connected to the tube anode, so that the tube will start in response to the large DC voltage (assuming that magnet 2a is on, the passbank drive is still present, and the ramp up circuitry within circuit 72 has brought up voltage B+ to the appropriate level (preferably 170 VDC).

The system operator may trigger an exposure by depressing a footswitch within delivery system 70. Control unit 6 will send a "footswitch active" signal to power supply 4 while the footswitch is depressed, to cause power supply 4 to supply a pulse of DC power to laser 2 for the duration of the "footswitch active" signal (and to cause MOSFET passbank 78 to induce a desired laser tube current during this period). Similarly, in response to an exposure request entered by the operator by actuating control keys or switches on display unit 8 (or in delivery system 70) control unit 6 will send an "exposure timer" signal having an operator-specified duration to power supply 4, to cause power supply 4 to supply a pulse of DC power to laser 2 for the duration of the "exposure timer" signal.

Control unit 6 will also generate a "start" signal timed from the leading edge of the "exposure timer" or "footswitch active" signal. In response to the "start" signal, starter circuit 82 within power supply 4 will pass DC power to the laser to ionize the tube.

In a preferred embodiment, control circuit 76 supplies a light control signal having the same duration as the "exposure timer" or "footswitch active" signal to a set of four amplifiers within passbank 78. Each amplifier controls the gate voltage for one of the MOSFETs within passbank 78. The output of each amplifier drives the associated MOSFET gate to a level causing a desired current to flow through the MOSFET, resulting in a desired laser tube current. Preferably, each MOSFET is protected by a 20A fuse and each gate drive amplifier input is protected by a .05A fuse. These fuses are intended to disconnect a faulty MOSFET and permit continued operation of the system using the remaining MOSFETS.

Crowbar circuit 80 will fire in response to a control signal from control circuit 76, which is in turn produced in response to a "shutdown" signal from control unit 6 or from safety monitor 54 through control unit 6. Upon firing of crowbar circuit 80, a DC voltage having magnitude (B-)-(12V) from power supply 83 is supplied (as a light control signal) to the amplifiers within passbank 78 in order to turn off each MOSFET gate drive and is supplied directly to the gate drive line of each MOSFET within passbank 78 in order to turn off the MOSFETS. Also upon firing of crowbar circuit 80, an SCR circuit within crowbar circuit 80 will shunt the tube current around the laser tube (so that the tube will deionize).

Magnet control switch 84 turns on tube magnet 2a when a "magnet" signal from control circuit 76 goes active, preferably shortly before (preferably, three zero crossings of AC signal from power supply 64 before) tube start circuit 82 triggers ionization of tube 2. Once magnet 2a is turned on, it preferably remains on for the duration of the exposure (i.e., the "magnet" signal remains active for the same duration as the above-mentioned "exposure timer" or "footswitch active" signal). At the end of the exposure, the "magnet" signal goes inactive, and circuit 84 will shut off magnet 2a (if voltage B+ is not greater than 155 VDC) or will keep magnet 2a on (to help drain down voltage B+) until voltage B+ falls to 155 VDC.

In a preferred embodiment, control circuit 76 will monitor the voltage B+, and send a control signal to control unit 6 if B+ exceeds 210 V. In turn, control unit 6 will send a control signal on "contactor trip" line (shown in Fig. 1) to relay board 16, to open the main contactor 56 (by breaking a 24 V supply thereto) and accordingly shut off AC power to the system.

## Claims

1. A pulsed laser system, including:
a laser (2);
a controlled power supply means (64,56,4) coupled to the laser (2) to supply a controlled pulse of power thereto such that the laser (2) produces an output beam pulse in response thereto;
control means (6) coupled to the controlled power supply means (64,56,4) for supplying control signals thereto, the controlled power supply means (64,56,4) being such as to generate pulses of power in response to and of a duration determined by the control signals; and
means (44) for generating an analog signal representative of beam power output by the laser (2), characterised in that the controlled power supply means includes analog feedback means (76,78) for controlling, independently of the said duration, the amplitude of each pulse of power supplied to the laser (2), in response to the said analog signal and a control signal from the control means (6).

2. A system according to claim 1 characterised in that the power supply means includes:
converter means (72, 74) for receiving AC power and converting the AC power into high voltage DC power; and
a laser starter circuit (82) connected to the converter means (72), and including means for starting the laser in response to the high voltage DC power and a start control signal.

3. A system according to claim 2, characterised in that the converter means (72, 74) includes:
semiconductor controlled rectifier means (75,77) for receiving the AC power and generating rectified power therefrom in response to firing control signals; and
a capacitor storage bank (74) connected to the semiconductor controlled rectifier means (75,77), wherein the capacitor storage bank converts the rectified power into filtered high voltage DC power.

4. A system according to claim 3, characterised in that the converter means (72, 74) includes a pair of semiconductor controlled rectifier circuits (75,77), each having an input which receives the AC power and an output connected to the capacitor storage bank (74), and a firing control circuit (79) connected to the pair of semiconductor controlled rectifier circuits (75,77), wherein the firing control circuit (79) generates the firing control signals, and wherein the firing control signals alternately fire the semiconductor controlled rectifier circuits (75,77).

5. A system according to claim 1, characterised in that the analog feedback means includes:
MOSFET passbank means (78) for causing a selected laser current to flow through the laser (2) for an exposure period in response to the control signals and the analog feedback signal.

6. A system according to claim 2, characterised by a safety monitor (54) connected to the converter means (72) and crowbar circuit means (80) for shunting laser current around the laser (2) in response to a shutdown signal from the safety monitor (54).

7. A system according to claim 6, characterised in that the analog feedback means includes a MOSFET passbank means (78) for causing a selected laser current to flow through the laser during an exposure period in response to the control signals and the analog feedback signal, and the MOSFET passbank means (78) turns off in response to said shutdown signal from the saftey monitor (54).

8. A system according to claim 1, characterised in that the power supply means includes means (72) for generating high voltage DC power from high voltage AC power; and
a contactor circuit (56) connected to the DC power generating means (72) and switchable in response to a trip signal, from a closed state to an open state preventing the high voltage AC power from reaching the DC power generating means (72); and in that
the control means (6) includes means for generating the trip signal, and supplying the trip signal to the contactor circuit (56) to open the contactor circuit (56), thereby preventing the high voltage AC power from reaching the DC power generating means (72).

9. A system according to claim 1, characterised in that the analog feedback means includes a first photocell means (44) for generating a first output voltage, and in that a second photo cell means (46) is provided for generating a second output voltage; and
beam sampling means (42) are providing for diverting a first portion (3A) of the output beam (3) to the first photo cell means (44) and a second portion (3B) of the output beam (3) to the second photo cell means (46).

10. A system according to claim 9, characterised in that the beam sampling means is a wedge-shaped beamsplitter (42), and in that the first portion (3A) of the output beam (3) reflects from a front surface (62) of the beamsplitter (42).

11. A system according to claim 9 or 10, characterised by safety monitor means (54) for receiving the second output voltage and a request voltage indicative of an operator-requested output beam power, and generating a control signal for shutting down the power supply in the event that the second output voltage and the request voltage indicate an unsafe operating condition.

12. A system according to claim 1, characterised in that the laser includes a gas laser tube (2);
in that the power supply means includes a converter means (72) for receiving AC power and converting the AC power into high voltage DC power, a starter means (82) for ionizing gas within the gas laser tube (2) in response to the high voltage DC power and a start control signal;
in that the analog feedback means includes a laser current means (78) for causing a laser current pulse having a selected amplitude to flow through the laser tube (2) for a duration determined by an exposure signal; and
in that the control means (6) includes a means for generating the exposure signal and the start control signal, and a means for supplying the exposure signal to the laser current means (78) and the start signal to the starter means (82).

13. A system according to claim 12, characterised by a display unit (8) connected to the control means (6), the display unit (8) including means for commanding the means for generating the exposure signal to generate the exposure signal with said duration.

14. A system according to claim 12, characterised by a delivery means (70) for receiving the laser output beam (3), the delivery means (70) being connected to the control means (6), and including a footswitch actuatable by an operator to command the means for generating the exposure signal to generate the exposure signal with said duration.

15. A system according to claim 12, characterised in that the analog signal generating means includes a first photocell means (44) for generating a first output voltage indicative of the output beam power, and the control means (6) includes:
means for generating a current control signal specifying the amplitude of the laser current pulse in response to a request voltage indicative of an operator-requested output beam power; and
means for supplying the current control signal to the laser current means (78) so as to achieve the operator-requested output beam power.

16. A system according to claim 15, characterised by a second photocell means (46) for generating a second output voltage indicative of the output beam power; a safety monitor means (54) for receiving the second output voltage and the request voltage indicative of an operator-requested output beam power, and generating a control signal for shutting down the converter means (72) in the event that the second output voltage and the request voltage indicate an unsafe operating condition.

17. A system according to claim 16, characterised by beam sampling means (42) for diverting a first portion (3A) of the output beam (3) to the first photo cell means (44) and a second portion (3B) of the output beam (3) to the second photo cell means (46).

18. A system according to claim 17, characterised in that the beam sampling means is a wedge-shaped beamsplitter (42), and the first portion (3A) of the output beam (3) reflects from a front surface (62) of the beamsplitter (42).

19. A system according to claim 12, characterised in that converter means (72) includes:
a semiconductor controlled rectifier means (75,77) for receiving the AC power and generating rectified power therefrom in response to firing control signals; and
a capacitor storage bank connected to the semiconductor controlled rectifier means (75,77), the capacitor storage bank converting the rectified power into the high voltage DC power.

20. A system according to claim 19, characterised in that the converter means includes a pair of semiconductor controlled rectifier circuits (75,77), each having an input which receives the AC power and an output connected to the capacitor storage bank, and a firing control circuit (79) connected to the pair of semiconductor controlled rectifier circuits (75,77), the firing control circuit (79) generating the firing control signals, and the firing control signals alternately firing the semiconductor controlled rectifier circuits (75,77).

21. A system according to claim 12, characterised in that the laser current means includes:
a MOSFET passbank means (78) for causing the laser current pulse to flow through the gas laser tube (2) for said exposure period in response to a light control signal having said duration.

22. A system according to claim 12, characterised by a safety monitor (54) connected to the converter means (72); and
in that the power supply means includes:
crowbar circuit means (80) for shunting the laser current around the gas laser tube (2) in response to a shutdown signal from the safety monitor (54).

23. A system according to claim 22, characterised in that the laser current means includes a MOSFET passbank means (78) for causing the laser current pulse to flow through the gas laser tube (2) for said exposure period in response to a light control signal having said duration, and the shutdown signal from the safety monitor is supplied to the MOSFET passbank means (78) which turns off in response to the shutdown signal.

24. A system according to claim 12, characterised by a contactor circuit (56) connected to the converter means (72) and operable in response to a trip signal, the control means (6) including means for generating the trip signal and supplying said trip signal to the contactor circuit (56) so as to open the contactor circuit (56) and prevent the high voltage AC power from reaching the converter means (72).

25. A system according to claim 12, characterised by closed coolant flow loop means for circulating coolant fluid past the gas laser tube (2) and the power supply means (4).

26. A system according to claim 25, characterised in that the coolant fluid is water, and in that a coolant temperature sensor means (32) is provided for supplying a coolant temperature signal to the control means (6); and
a coolant flow rate sensor means (20) is provided for supplying a coolant flow rate signal to the control means (6), and the control means (6) generating a signal for deactivating the supply of DC power in the event that at least one of the coolant temperature signal and the coolant flow rate signal indicates an abnormal operating condition.

27. A system according to claim 1 characterised by a monitoring means (54) for terminating the laser output pulse upon detection of an undesirable laser output pulse parameter, such as may result from failure of the power supply.

28. A system according to claim 27 characterised in that the analog signal generating means includes a first photodetector (44), and in that the monitoring means includes:
a second photodetector (46); and
beam sampling means (42) for diverting a first portion of the laser output pulse to the first photodetector (44) and a second portion (3B) of the laser output pulse to the second photodetector (46).

29. A system according to claim 28, characterised in that the beam sampling means is a wedge-shaped beamsplitter (42), and the first portion (3A) of the output beam reflects from a front surface (62) of the beamsplitter (42).

30. A system according to claim 27, characterised in that the monitoring means includes a safety monitor means (54) for supplying a shutdown signal to the power supply means (4), and the power supply means (4) includes crowbar circuit means (80) for shunting laser current around the laser (2) in response to the shutdown signal.

31. A system according to claim 30, characterised in that the monitoring means includes:
a first photodetector means (44) ;
a second photodetector means (46) for supplying a beam monitoring signal to the safety monitor (54); and
beam sampling means (42) for diverting a first portion (3A) of the laser output pulse to the first photodetector means (44) and a second portion (3B) of the laser output pulse to the second photodetector (46), and the safety monitor means (54) generates said shutdown signal in response to the beam monitoring signal from the second photodetector means (46).

32. A system according to claim 1, characterised in that each laser output pulse has a rise time of not more than about one half millisecond, and a fall time much shorter than one half millisecond.

33. A system according to claim 1, characterised in that the laser includes a gas laser tube (2);
the power supply means includes starter means (82) for ionizing gas within the laser tube (2) in response to a voltage signal and a start control signal; and
the analog feedback means includes laser current means (78) for causing a laser current pulse having an amplitude to flow through the laser tube (2) for a duration determined by an exposure signal so as to cause the laser means to generate a laser output beam pulse, the control means (6) including a means for generating the exposure signal and the start control signal, and means for supplying the exposure signal to the laser current means (78) and the start control signal to the starter means (82).

34. A system according to claim 33, characterised in that each laser output pulse has a rise time of not more than about one half millisecond, and a fall time much shorter than one half millisecond.

## Patentansprüche

1. Gepulstes Lasersystem, umfassend:
einen Laser (2),
eine gesteuerte Stromversorgungseinrichtung (64, 56, 4), die an den Laser (2) angeschlossen ist, um diesem einen gesteuerten Puls von Leistung derart zuzuführen, daß der Laser (2) einen Ausgangsstrahlpuls in Antwort darauf erzeugt,
eine Steuereinrichtung (6), die an die gesteuerte Stromversorgungseinrichtung (64, 56, 4) angeschlossen ist, um dieser Steuersignale zuzuführen, wobei die gesteuerte Stromversorgungseinrichtung (64, 56, 4) so ist, daß Leistungspulse in Antwort darauf und auf eine Dauer, die durch die Steuersignale bestimmt ist, erzeugt werden, und
eine Einrichtung (44) zum Erzeugen eines analogen Signals, welches eine Strahlausgangsleistung des Lasers (2) darstellt,
dadurch gekennzeichnet,
daß die gesteuerte Stromversorgungseinrichtung eine analoge Rückkopplungseinrichtung (76, 78) zum Steuern, unabhängig von der Dauer, der Amplitude jedes Pulses von dem Laser zugeführter Leistung (2), in Antwort auf das analoge Signal und auf ein Steuersignal von der Steuereinrichtung (6) umfasst.

2. System nach Anspruch 1, dadurch gekennzeichnet, daß die Stromversorgungseinrichtung umfaßt:
eine Wandlereinrichtung (72, 74) zum Empfangen von Wechselstromleistung und Wandeln der Wechselstromleistung in eine Hochspannungsgleichstromleistung, und eine Laserstarterschaltung (82), die an die Wandlereinrichtung (72) angeschlossen ist, und eine Einrichtung zum Starten des Lasers in Ansprechen auf das Hochspannungsgleichstromsignal und ein Startsteuersignal umfasst.

3. System nach Anspruch 2, dadurch gekennzeichnet, daß die Wandlereinrichtung (72, 74) umfaßt:
eine halbleitergesteuerte Gleichrichtereinrichtung (75, 77) zum Empfangen der Wechselstromleistung und Erzeugen gleichgerichteter Leistung aus dieser in Antwort auf Zündesteuersignale, und
eine Kondensatorspeicherbank (74), die an die halbleitergesteuerte Gleichrichtereinrichtung (75, 77) angeschlossen ist, wobei die Kondensatorspeicherbank die gleichgerichtete Leistung in gefilterte Hochspannungsgleichstromleistung wandelt.

4. System nach Anspruch 3, dadurch gekennzeichnet, daß die Wandlereinrichtung (72, 74) ein Paar von halbleitergesteuerten Gleichrichterschaltungen (75, 77) umfaßt, von welchen jede einen Eingang hat, der die Wechselstromleistung aufnimmt und einen Ausgang hat, der mit der Kondensatorspeicherbank (74) verbunden ist, und eine Zündsteuerschaltung (79) umfaßt, die mit dem Paar von halbleitergesteuerten Gleichrichterschaltungen (75, 77) verbunden ist, wobei die Zündsteuerschaltung (79) die Zündsteuersignale erzeugt, und wobei die Zündsteuersignale abwechselnd die halbleitergesteuerten Gleichrichterschaltungen (75, 77) zünden.

5. System nach Anspruch 1, dadurch gekennzeichnet, daß die analoge Rückkopplungseinrichtung umfaßt:
eine MOSFET-Durchgangsbankeinrichtung (78), um zu bewirken, daß ein ausgewählter Laserstrom in Antwort auf die Steuersignale und das analoge Rückkopplungssignal während einer Belichtungsdauer durch den Laser (2) strömt.

6. System nach Anspruch 2, gekennzeichnet durch eine Sicherheitsüberwachung (54), die mit der Wandlereinrichtung (72) verbunden ist, und eine Crowbar-Schaltungseinrichtung (80), um den Laserstrom entlang des Lasers (2) in Antwort auf ein Ausschaltsignal von dem Sicherheitsüberwachung (54) umzuleiten.

7. System nach Anspruch 6, dadurch gekennzeichnet, daß die analoge Rückkopplungseinrichtung eine MOSFET-Durchgangsbankeinrichtung (78) umfaßt, um zu bewirken, daß ein ausgewählter Laserstrom während einer Belichtungsdauer in Antwort auf die Steuersignale und das analoge Rückkopplungssignal durch den Laser fließt und die MOSFET-Durchgangsbankeinrichtung (78) in Antwort auf das Abschaltsignal von der Sicherheitsüberwachung (54) abgeschaltet wird.

8. System nach Anspruch 1, dadurch gekennzeichnet, daß die Stromversorgungseinrichtung eine Einrichtung (72) umfaßt, um Hochspannungsgleichstromleistung aus einer Hochspannungswechselstromleistung zu erzeugen, und eine Kontaktschaltung (56), die mit der Gleichspannungsleistungserzeugungseinrichtung (72) verbunden ist, und in Antwort auf ein Auslösesignal von einem geschlossenen Zustand in einen offenen Zustand übergeht, welches verhindert, daß die Hochspannungswechselstromleistung die Gleichspannungswechselstromerzeugungseinrichtung (72) erreicht, und
daß die Steuereinrichtung (6) eine Einrichtung umfaßt, um das Auslösesignal zu erzeugen und das Auslösesignal der Kontaktschaltung (56) zuzuführen, um die Kontaktschaltung (56) zu öffnen, wobei verhindert wird, daß die Hochspannungswechselstromleistung die Gleichstromleistungserzeugungseinrichtung (72) erreicht.

9. System nach Anspruch 1, dadurch gekennzeichnet,
daß die analoge Rückkopplungseinrichtung eine erste Photozelleneinrichtung (44) umfaßt, um eine erste Ausgangsspannung zu erzeugen, und daß eine zweite Photozelleneinrichtung (46) bereitgestellt ist, um eine zweite Ausgangsspannung zu erzeugen, und
daß eine Strahlabtasteinrichtung (42) bereitgestellt ist, um einen ersten Anteil (3A) des Ausgangsstrahls (3) zur ersten Photozelleneinrichtung (44) umzuleiten, und einen zweiten Anteil (3B) des Ausgangsstrahls (3) zur zweiten Photozelleneinrichtung (46) umzuleiten.

10. System nach Anspruch 9, dadurch gekennzeichnet, daß die Strahlabtasteinrichtung ein keilförmiger Strahlteiler (42) ist, und daß der erste Anteil (3A) des Ausgangsstrahls (3) von einer Frontfläche (62) des Strahlteilers (42) reflektiert ist.

11. System nach Anspruch 9 oder 10, gekennzeichnet durch eine Sicherheitsüberwachungseinrichtung (54) zum Empfangen der zweiten Ausgangsspannung und einer Anforderungsspannung, die eine Bediener-angeforderte Ausgangssignalleistung anzeigt, und ein Steuersignal erzeugt, um die Leistungsversorgung abzuschalten, falls die zweite Ausgangsspannung und die Anforderungsspannung einen unsicheren Betriebszustand anzeigen.

12. System nach Anspruch 1, dadurch gekennzeichnet, daß der Laser ein Gaslaserrohr umfaßt,
daß die Leistungsversorgungseinrichtung eine Wandlereinrichtung (72) umfaßt, um Wechselstromleistung zu empfangen und die Wechselstromleistung in Hochspannungsgleichstromleistung zu wandeln, eine Startereinrichtung (82) umfaßt zum Ionisieren von Gas innerhalb des Gaslaserrohrs (2) in Antwort auf die Hochspannungsgleichstromleistung und ein Startsteuersignal,
daß die analoge Rückkopplungseinrichtung eine Laserstromeinrichtung (78) umfaßt, um zu bewirken, daß ein Laserstrompuls mit einer ausgewählten Amplitude während einer durch das Belichtungssignal bestimmten Zeitdauer durch das Laserrohr (2) strömt, und
daß die Steuereinrichtung (6) eine Einrichtung zum Erzeugen des Belichtungssignals und des Startsteuersignals umfaßt und eine Einrichtung zum Zuführen des Belichtungssignals zur Laserstromsteuereinrichtung (78) und des Startsignals zur Starteinrichtung (82) umfaßt.

13. System nach Anspruch 12, gekennzeichnet durch eine Anzeigeeinrichtung (8), die mit der Steuereinrichtung (6) verbunden ist, wobei die Anzeigeeinrichtung (8) eine Einrichtung zum Anweisen der Einrichtung zur Erzeugung des Belichtungssignals mit dieser Dauer umfaßt.

14. System nach Anspruch 12, gekennzeichnet durch eine Zuführeinrichtung (70) zum Empfangen des Laserausgangsstrahls (3), wobei die Zuführeinrichtung (70) mit der Steuereinrichtung (6) verbunden ist und einen durch einen Bediener betätigbaren Fußschalter umfaßt, um die Einrichtung zur Erzeugung des Belichtungssignals anzuweisen, das Belichtungssignal mit dieser Dauer zu erzeugen.

15. System nach Anspruch 12, dadurch gekennzeichnet, daß die analoge signalerzeugende Einrichtung eine erste Photozelleneinrichtung (44) zum Erzeugen einer ersten Ausgangsspannung, welche die Strahlausgangsleistung anzeigt, umfaßt, und daß die Steuereinrichtung (6) umfaßt:
eine Einrichtung zum Erzeugen eines Stromsteuersignals, welches die Amplitude des Laserstrompulses in Ansprechen auf eine Anforderungsspannung, welche eine Bediener-angeforderte Strahlausgangsleistung anzeigt, definiert, und
eine Einrichtung zum Zuführen des Stromsteuersignals zur Laserstromeinrichtung (78), um so die Bediener-angeforderte Ausgangsleistung zu erhalten.

16. System nach Anspruch 15, gekennzeichnet durch eine zweite Photozelleneinrichtung (46) zum Erzeugen einer zweiten Ausgangsspannung, welche die Strahlausgangsleistung anzeigt, eine Sicherheitsüberwachungseinrichtung (54) zum Empfangen der zweiten Ausgangsspannung und der Anforderungsspannung, die eine Bediener-angeforderte Strahlausgangsleistung anzeigt, und Erzeugen eines Steuersignals zum Abschalten der Wandlereinrichtung (72), falls die zweite Ausgangsspannung und die Anforderungsspannung einen unsicheren Betriebszustand anzeigen.

17. System nach Anspruch 16, gekennzeichnet durch eine Strahlabtasteinrichtung (42), zum Umleiten eines ersten Anteils (3A) des Ausgangsstrahls (3) zur ersten Photozelleneinrichtung (44) und eines zweiten Anteils (3B) des Ausgangsstrahls (3) zur zweiten Photozelleneinrichtung (46).

18. System nach Anspruch 17, dadurch gekennzeichnet, daß die Strahlabtasteinrichtung ein keilförmiger Strahlteiler (42) ist, und der erste Anteil (3A) des Ausgangsstrahls (3) von einer Frontfläche (62) des Strahlteilers (42) reflektiert ist.

19. System nach Anspruch 12, dadurch gekennzeichnet, daß die Wandlereinrichtung (72) umfaßt:
eine halbleitergesteuerte Gleichrichtereinrichtung (75, 77) zum Empfangen der Wechselstromleistung und zum Erzeugen von gleichgerichteter Leistung aus dieser in Antwort auf Zündsteuersignale, und
eine Kondensatorspeicherbank, die mit der halbleitergesteuerten Gleichrichtereinrichtung (75, 77) verbunden ist, wobei die Kondensatorspeicherbank die gleichgerichtete Leistung in die Hochspannungsgleichstromleistung wandelt.

20. System nach Anspruch 19, dadurch gekennzeichnet, daß die Wandlereinrichtung ein Paar von halbleitergesteuerten Gleichrichterschaltungen (75, 77) umfaßt, von welchen jede einen Eingang hat, der die Wechselstromleistung empfängt und einen Ausgang hat, der mit der Kondensatorspeicherbank verbunden ist, und eine Zündsteuerschaltung (79), die mit dem Paar von halbleitergesteuerten Gleichrichterschaltungen (75, 77) verbunden ist, wobei die Zündsteuerschaltung (79) die Zündsteuersignale erzeugt und die Zündsteuersignale abwechselnd die halbleitergesteuerten Gleichrichterschaltungen (75, 77) zünden.

21. System nach Anspruch 12, dadurch gekennzeichnet, daß die Laserstromeinrichtung umfaßt:
eine MOSFET-Durchgangsbankeinrichtung (78), um zu bewirken, daß der Laserstrompuls durch das Gaslaserrohr (2) während der Belichtungsdauer in Antwort auf ein Lichtsteuersignal mit dieser Dauer strömt.

22. System nach Anspruch 12, gekennzeichnet durch eine Sicherheitsüberwachung (54), die mit der Wandlereinrichtung (72) verbunden ist, und dadurch, daß die Stromsteuereinrichtung umfaßt:
eine Crowbar- bzw. Sicherheitsschalteinrichtung (80) zum Umleiten des Laserstroms um das Gaslaserrohr (2) in Ansprechen auf ein Abschaltsignal von der Sicherheitsüberwachung (54).

23. System nach Anspruch 22, dadurch gekennzeichnet, daß die Laserstromeinrichtung eine MOSFET-Durchgangsbankeinrichtung (78) umfaßt, um zu bewirken, daß der Laserstrompuls durch das Gaslaserrohr (2) während der Belichtungsdauer in Antwort auf ein Lichtsteuersignal mit dieser Dauer strömt, und wobei das Abschaltsignal von der Sicherheitsüberwachung der MOSFET-Durchgangsbankeinrichtung zugeführt ist, die in Ansprechen auf das Abschaltsignal abschaltet.

24. System nach Anspruch 12, gekennzeichnet durch eine Kontaktschaltung (56), die mit der Wandlereinrichtung (72) verbunden ist und in Ansprechen auf ein Auslösesignal operabel ist, wobei die Steuereinrichtung (6) eine Einrichtung zum Erzeugen des Auslösesignals und zum Zuführen des Auslösesignals zur Kontaktschaltung (56) umfaßt, um so die Kontaktschaltung (56) zu öffnen und zu verhindern, daß die Hochspannungswechselstromleistung die Wandlereinrichtung (72) erreicht.

25. System nach Anspruch 12, gekennzeichnet durch eine geschlossene Kühlmittelkreiseinrichtung zum Zirkulieren eines Kühlmittelfluids durch das Gaslaserrohr (2) und die Stromversorgungseinrichtung (4).

26. System nach Anspruch 25, dadurch gekennzeichnet, daß das Kühlmittelfluid Wasser ist, und daß eine Kühlmitteltemperatursensoreinrichtung (32) bereitgestellt, um der Steuereinrichtung (6) ein Kühlmitteltemperatursignal zuzuführen, und eine Kühlmittelströmungsgeschwindigkeits-Sensoreinrichtung (20) bereitgestellt ist, um der Steuereinrichtung (6) ein Kühlmittelströmungsgeschwindigkeitssignal zuzuführen, und wobei die Steuereinrichtung (6) ein Signal zum Deaktivieren der Gleichstromleistungszufuhr erzeugt, falls wenigstens eines von beiden Signalen, das Kühlmitteltemperatursignal oder das Kühlmittelströmungsgeschwindigkeitssignal einen abnormalen Betriebszustand anzeigt.

27. System nach Anspruch 1, gekennzeichnet durch eine Überwachungseinrichtung (54) zum Beenden des Laserausgangspulses bei Erfassen eines unerwünschten Laserausgangspulsparameters, wie dieser von einer Fehlfunktion der Stromversorgung herrühren kann.

28. System nach Anspruch 27, dadurch gekennzeichnet, daß die das analoge Signal erzeugende Einrichtung einen ersten Photodetektor (44) umfaßt, und daß die Überwachungseinrichtung umfaßt:
einen zweiten Photodetektor (46) und eine Strahlabtasteinrichtung (42) zum Umleiten eines ersten Anteils des Laserausgangspulses zum ersten Photodetektor (44) und eines zweiten Anteils (3B) des Laserausgangspulses zum zweiten Photodetektor (46).

29. System nach Anspruch 28, dadurch gekennzeichnet, daß die Strahlabtasteinrichtung ein keilförmiger Strahlteiler (42) ist und der erste Anteil (3A) des Ausgangsstrahls von einer Frontfläche (62) des Strahlteilers (42) reflektiert ist.

30. System nach Anspruch 27, dadurch gekennzeichnet, daß die Überwachungeinrichtung eine Sicherheitsüberwachungseinrichtung (54) zum Zuführen eines Abschaltsignals zur Leistungsversorgungseinrichtung (4) umfaßt, und die Leistungsversorgungseinrichtung (4) eine Crowbar- bzw. Sicherheitsschalteinrichtung (80) umfaßt, um den Laserstrom um den Laser (2) in Antwort auf das Abschaltsignal herumzuleiten.

31. System nach Anspruch 30, dadurch gekennzeichnet, daß die Überwachungeinrichtung umfaßt:
eine erste Photodetektoreinrichtung (44), eine zweite Photodetektoreinrichtung (46) zum Zuführen eines Strahlüberwachungsignals zur Sicherheitsüberwachung (54), und
eine Strahlteilereinrichtung (42) zum Umleiten eines ersten Anteils (3A) des Laserausgangspulses zur ersten Photodetektoreinrichtung (44) und eines zweiten Anteils (3B) des Laserausgangspulses zum zweiten Photodetektor (46), und wobei die Sicherheitsüberwachungseinrichtung (54) ein Abschaltsignal in Ansprechen auf das Strahlüberwachungsignal von der zweiten Photodetektoreinrichtung (46) erzeugt.

32. System nach Anspruch 1, dadurch gekennzeichnet, daß jeder Laserausgangspuls eine Anstiegszeit von nicht mehr als ungefähr 1/2 ms und eine Abfallzeit, die viel kürzer als 1/2 ms ist, aufweist.

33. System nach Anspruch 1, dadurch gekennzeichnet, daß der Laser ein Gaslaserrohr (2) umfaßt, die Leistungsversorgungseinrichtung eine Startereinrichtung (82) umfaßt zum Ionisieren von Gas innerhalb des Laserrohrs (2) in Ansprechen auf ein Spannungssignal und ein Startsteuersignal, und
die analoge Rückkopplungseinrichtung eine Laserstromeinrichtung (78) umfaßt, um zu bewirken, daß ein Laserstrompuls mit einer Amplitude während einer Dauer, die durch ein Belichtungssignal bestimmt ist, durch das Laserrohr (2) strömt, um so die Lasereinrichtung zu veranlassen, einen Laserausgangsstrahlpuls zu erzeugen, wobei die Steuereinrichtung (6) eine Einrichtung zum Erzeugen des Belichtungssignals und des Startsteuersignals umfaßt, und eine Einrichtung zum Zuführen des Belichtungssignals zur Laserstromeinrichtung (78) und des Startsteuersignals zur Starteinrichtung (82).

34. System nach Anspruch 33, dadurch gekennzeichnet, daß jeder Laserausgangspuls eine Anstiegszeit von nicht mehr als ungefähr 1/2 ms und eine Abfallzeit, die viel kürzer als 1/2 ms ist, hat.

## Revendications

1. Système laser pulsé, comportant :
un laser (2) ;
des moyens (64,56,4) d'alimentation électrique commandés couplés au laser (2) pour lui fournir une impulsion commandée de façon que le laser (2) produise une impulsion de faisceau de sortie en réponse à celle-ci ;
des moyens (6) de commande couplés aux moyens (64,56,4) d'alimentation électrique commandés pour leur fournir des signaux de commande, les moyens (64,56,4) d'alimentation électrique commandés étant tels qu'ils génèrent des impulsions de puissance en réponse aux signaux de commande et avec une durée déterminée par ceux-ci ; et
des moyens (44) destinés à générer un signal analogique représentatif de la puissance de sortie du faisceau du laser (2), caractérisé en ce que les moyens d'alimentation électrique commandés comportent des moyens (76,78) à rétroaction analogiques destinés à commander, indépendamment de ladite durée, l'amplitude de chaque impulsion de puissance fournie au laser (2), en réponse audit signal analogique et à un signal de commande provenant des moyens (6) de commande.

2. Système selon la revendication 1, caractérisé en ce que les moyens d'alimentation électrique comportent :
des moyens (72,74) convertisseurs destinés à recevoir un courant alternatif et convertir le courant alternatif en un courant continu à haute tension ; et
un circuit (82) de mise en fonctionnement de laser connecté aux moyens (72) convertisseurs, et comportant des moyens destinés à mettre en fonctionnement le laser en réponse au courant continu à haute tension et à un signal de commande de mise en fonctionnement.

3. Système selon la revendication 2, caractérisé en ce que les moyens (72,74) convertisseurs comportent :
des moyens (75,77) redresseurs commandés à semiconducteurs destinés à recevoir le courant alternatif et générer à partir de celui-ci un courant redressé en réponse à des signaux de commande d'amorçage ; et
un banc (74) de stockage à condensateurs connecté aux moyens (75,77) redresseurs commandés à semiconducteurs, dans lequel le banc de stockage à condensateurs convertit le courant redressé en un courant continu à haute tension filtré.

4. Système selon la revendication 3, caractérisé en ce que les moyens (72,74) convertisseurs comportent une paire de circuits (75,77) redresseurs commandés à semiconducteurs, ayant chacun une entrée qui reçoit le courant alternatif et une sortie connectée au banc (74) de stockage à condensateurs, et un circuit (79) de commande d'amorçage connecté à la paire de circuits (75,77) redresseurs commandés à semiconducteurs, dans lequel le circuit (79) de commande d'amorçage génère les signaux de commande d'amorçage, et dans lequel les signaux de commande d'amorçage amorcent en alternance les circuits (75,77) redresseurs commandés à semiconducteurs.

5. Système selon la revendication 1, caractérisé en ce que les moyens à rétroaction analogiques comportent :
des moyens (78) à banc de commutation à transistors MOS à effet de champ destinés à provoquer le passage d'un courant de laser sélectionné dans le laser (2) pendant une période d'exposition en réponse aux signaux de commande et au signal de rétroaction analogique.

6. Système selon la revendication 2, caractérisé par un dispositif (54) de contrôle de sécurité connecté aux moyens (72) convertisseurs et à des moyens (80) à circuit de protection pour dériver le courant de laser afin qu'il évite le laser (2) en réponse à un signal d'extinction provenant du dispositif (54) de contrôle de sécurité.

7. Système selon la revendication 6, caractérisé en ce que les moyens à rétroaction analogiques comportent des moyens (78) à banc de commutation à transistors MOS à effet de champ destinés à provoquer le passage d'un courant de laser sélectionné dans le laser pendant une période d'exposition, en réponse aux signaux de commande et au signal de rétroaction analogique, et en ce que les moyens (78) à banc de commutation à transistors MOS à effet de champ deviennent non passants en réponse audit signal d'extinction provenant du dispositif (54) de contrôle de sécurité.

8. Système selon la revendication 1, caractérisé en ce que les moyens d'alimentation électrique comportent :
des moyens (72) destinés à générer un courant continu à haute tension à partir d'un courant alternatif à haute tension ; et
un circuit (56) contacteur connecté aux moyens (72) générateurs de courant continu et pouvant être commuté en réponse à un signal de déclenchement, d'un état fermé à un état ouvert empêchant le courant alternatif à haute tension d'atteindre les moyens (72) générateurs de courant continu ; et en ce que
les moyens (6) de commande comportent des moyens destinés à générer le signal de déclenchement, et à fournir le signal de déclenchement au circuit (56; contacteur afin d'ouvrir le circuit (56) contacteur, en empêchant ainsi le courant alternatif à haute tension d'atteindre les moyens (72) générateurs de courant continu.

9. Système selon la revendication 1, caractérisé en ce que les moyens à rétroaction analogiques comportent :
des premiers moyens (44) à cellule photoélectrique destinés à générer une première tension de sortie, et en ce que des seconds moyens (46) à cellule photoélectrique sont prévus pour générer une seconde tension de sortie ; et
des moyens (42) d'échantillonnage de faisceau sont prévus pour dévier une première partie (3A) du faisceau (3) de sortie vers les premiers moyens (44) à cellule photoélectrique, et une seconde partie (3B) du faisceau (3) de sortie vers les seconds moyens (46) à cellule photoélectrique.

10. Système selon la revendication 9, caractérisé en ce que les moyens d'échantillonnage de faisceau sont une séparatrice (42) de faisceaux en forme de coin, et en ce que la première partie (3A) du faisceau (3) de sortie se réfléchit sur une surface (62) avant de la séparatrice (42) de faisceaux.

11. Système selon la revendication 9 ou 10, caractérisé par des moyens (54) de contrôle de sécurité destinés à recevoir la seconde tension de sortie et une tension de demande représentative d'une puissance de faisceau de sortie demandée par un opérateur, et à générer un signal de commande pour interrompre l'alimentation électrique dans le cas où la seconde tension de sortie et où la tension de demande indiquent une condition de fonctionnement dangereuse.

12. Système selon la revendication 1, caractérisé en ce que le laser comporte un tube (2) à laser à gaz ;
en ce que les moyens d'alimentation électriques comportent des moyens (72) convertisseurs destinés à recevoir un courant alternatif et à convertir le courant alternatif en un courant continu à haute tension, des moyens (82) de mise en fonctionnement pour ioniser un gaz à l'intérieur du tube (2) à laser à gaz en réponse au courant continu à haute tension et à un signal de commande de mise en fonctionnement ;
en ce que les moyens à rétroacticn analogiques comportent des moyens (78) de production de courant laser pour faire passer une impulsion de courant laser d'amplitude sélectionnée dans le tube (2) à laser pendant une durée déterminée par un signal d'exposition ; et
en ce que les moyens (6) de commande comportent des moyens destinés à générer le signal d'exposition et le signal de commande de mise en fonctionnement, et des moyens destinés à fournir le signal d'exposition aux moyens (78) générateurs de courant laser et le signal de mise en marche aux moyens (82) de mise en fonctionnement.

13. Système selon la revendication 12, caractérisé par une unité (8) d'affichage connectée aux moyens (6) de commande, l'unité (8) d'affichage comportant des moyens pour commander les moyens destinés à générer le signal d'exposition afin de générer le signal d'exposition avec ladite durée.

14. Système selon la revendication 12, caractérisé par des moyens (70) de fourniture destinés à recevoir le faisceau (3) de sortie laser, les moyens (70) de fourniture étant connectés aux moyens (6) de commande, et comportant un commutateur à pied pouvant être actionné par un opérateur pour ordonner aux moyens destinés à générer le signal d'exposition, de générer le signal d'exposition avec ladite durée.

15. Système selon la revendication 12, caractérisé en ce que les moyens générateurs de signal analogique comportent des premiers moyens (44) à cellule photoélectrique destinés à générer une première tension de sortie représentative de la puissance du faisceau de sortie, et en ce que les moyens (6) de commande comportent :
des moyens destinés à générer un signal de commande de courant spécifiant l'amplitude de l'impulsion de courant de laser en réponse à une tension de demande représentative d'une puissance de faisceau de sortie demandée par l'opérateur ; et
des moyens destinés à fournir le signal de commande de courant aux moyens (78) générateurs de courant de laser de façon à obtenir la puissance de faisceau de sortie demandée par l'opérateur.

16. Système selon la revendication 15, caractérisé par des seconds moyens (46) à cellule photoélectrique destinés à générer une seconde tension de sortie représentative de la puissance du faisceau de sortie ; des moyens (54) de contrôle de sécurité destinés à recevoir la seconde tension de sortie et la tension de demande représentative d'une puissance de faisceau de sortie demandée par l'opérateur, et à générer un signal de commande destiné à interrompre le fonctionnement des moyens (72) convertisseurs au cas où la seconde tension de sortie et où la tension de demande indiquent une condition de fonctionnement dangereuse.

17. Système selon la revendication 16, caractérisé par des moyens (42) d'échantillonnage de faisceau destinés à dévier une première partie (3A) du faisceau (3) de sortie vers les premiers moyens (44) à cellule photoélectrique, et une seconde partie (3B) du faisceau (3) de sortie vers les seconds moyens (46) à cellule photoélectrique.

18. Système selon la revendication 17, caractérisé en ce que les moyens d'échantillonnage de faisceau sont une séparatrice (42) de faisceaux en forme de coin, et en ce que la première partie (3A) du faisceau (3) de sortie se réfléchit sur une surface (62) avant de la séparatrice (42) de faisceaux.

19. Système selon la revendication 12, caractérisé en ce que les moyens (72) convertisseurs comportent :
des moyens (75, 77) redresseurs commandés à semiconducteurs destinés à recevoir le courant alternatif et à générer un courant redressé à partir de celui-ci en réponse à des signaux de commande d'amorçage ; et
un banc de stockage à condensateurs connecté aux moyens (75,77) redresseurs commandés à semiconducteurs, le banc de stockage à condensateurs convertissant le courant redressé en un courant continu à haute tension.

20. Système selon la revendication 19, caractérisé en ce que les moyens convertisseurs comportent une paire de circuits (75,77) redresseurs commandés à semiconducteurs ayant chacun une entrée qui reçoit le courant alternatif et une sortie connectée au banc de stockage à condensateurs, et un circuit (79) de commande d'amorçage connecté à la paire de circuits (75,77) redresseurs commandés à semiconducteurs, le circuit (79) de commande d'amorçage générant les signaux de commande d'amorçage, et les signaux de commande d'amorçage amorçant en alternance les circuits (75,77) redresseurs commandés à semiconducteurs.

21. Système selon la revendication 12, caractérisé en ce que les moyens générateurs de courant de laser comportent :
des moyens (78) à banc de commutation à transistors MOS à effet de champ destinés à faire passer l'impulsion de courant de laser dans le tube (2) à laser à gaz pendant ladite période d'exposition en réponse à un signal de commande lumineux ayant ladite durée.

22. Système selon la revendication 12, caractérisé par un dispositif (54) de contrôle de sécurité connecté aux moyens (72) convertisseurs ; et
en ce que les moyens d'alimentation électrique comportent :
des moyens (80) à circuit de protection pour dériver le courant laser afin qu'il évite le tube (2) à laser à gaz en réponse à un signal d'arrêt de fonctionnement provenant du dispositif (54) de contrôle de sécurité.

23. Système selon la revendication 22, caractérisé en ce que les moyens à courant de laser comportent des moyens (78) à banc de commutation à transistors MOS à effet de champ destinés à faire passer l'impulsion de courant de laser dans le tube (2) à laser à gaz pendant ladite période d'exposition en réponse à un signal de commande lumineux ayant ladite durée, et en ce que le signal d'arrêt de fonctionnement provenant du dispositif de contrôle de sécurité est fourni aux moyens (78) à banc de commutation à transistors MOS à effet de champ qui deviennent non passants en réponse au signal d'arrêt de fonctionnement.

24. Système selon la revendication 12, caractérisé par un circuit (56) contacteur connecté aux moyens (72) convertisseurs et pouvant fonctionner en réponse à un signal de déclenchement, les moyens (6) de commande comportant des moyens destinés à générer le signal de déclenchement et à fournir ledit signal de déclenchement au circuit (56) contacteur de façon à ouvrir le circuit (56) contacteur et à empêcher que le courant alternatif à haute tension n'atteigne les moyens (72) convertisseurs.

25. Système selon la revendication 12, caractérisé par des moyens de circulation de fluide de refroidissement en circuit fermé destinés à faire circuler un fluide de refroidissement le long du tube (2) à laser à gaz et des moyens (4) d'alimentation électrique.

26. Système selon la revendication 25, caractérisé en ce que le fluide de refroidissement est de l'eau, et en ce que des moyens (32) détecteurs de température du fluide de refroidissement sont prévus pour fournir un signal de température du fluide de refroidissement aux moyens (6) de commande ; et
en ce que des moyens (20) détecteurs de débit de fluide de refroidissement sont prévus pour fournir un signal de débit de fluide de refroidissement aux moyens (6) de commande, et en ce que les moyens (6) de commande génèrent un signal destiné à désactiver l'alimentation en courant continu au cas où au moins l'un du signal de température du fluide de refroidissement et du signal de débit du fluide de refroidissement indique une condition de fonctionnement anormale.

27. Système selon la revendication 1, caractérisé par des moyens (54) de contrôle pcur interrompre l'impulsion de sortie laser lors de la détection d'un paramètre d'impulsion de sortie laser indésirable, qui peut par exemple résulter d'une panne de l'alimentation électrique.

28. Système selon la revendication 27, caractérisé en ce que les moyens générateurs de signal analogiques comportent un premier photodétecteur (44), et en ce que les moyens de contrôle comportent :
un second photodétecteur (46) ; et
des moyens (42) d'échantillonnage de faisceau pour dévier une première partie de l'impulsion de sortie laser vers le premier photodétecteur (44) et une seconde partie (3B) de l'impulsion de sortie laser vers le second photodétecteur (46).

29. Système selon la revendication 28, caractérisé en ce que les moyens d'échantillonnage de faisceau sont une séparatrice (42) de faisceaux en forme de coin, et en ce que la première partie (3A) du faisceau de sortie se réfléchit sur une surface (62) avant de la séparatrice (42) de faisceaux.

30. Système selon la revendication 27, caractérisé en ce que les moyens de contrôle comportent des moyens (54) de contrôle de sécurité destinés à fournir un signal d'arrêt de fonctionnement aux moyens (4) d'alimentation électrique, et en ce que les moyens (4) d'alimentation électrique comportent des moyens (80) à circuit de protection destinés à dériver le courant de laser afin qu'il évite le laser (2) en réponse au signal d'arrêt de fonctionnement.

31. Système selon la revendication 30, caractérisé en ce que les moyens de contrôle comportent :
des premiers moyens (44) photodétecteurs ;
des seconds moyens (46) photodétecteurs destinés à fournir un signal de contrôle de faisceau au dispositif (54) de contrôle de sécurité ; et
des moyens (42) d'échantillonnage de faisceau pour dévier une première partie (3A) de l'impulsion de sortie laser vers les premiers moyens photodétecteurs (44) et une seconde partie (3B) de l'impulsion de sortie laser vers le second photodétecteur (46), et en ce que les moyens (54) de contrôle de sécurité génèrent ledit signal d'arrêt de fonctionnement en réponse au signal de contrôle de faisceau provenant des seconds moyens (46) photodétecteurs.

32. Système selon la revendication 1, caractérisé en ce que chaque impulsion de sortie laser a un temps de montée non supérieur à environ une demi-milliseconde, et un temps de descente beaucoup plus court qu'une demi-milliseconde.

33. Système selon la revendication 1, caractérisé en ce que le laser comporte un tube (2) à laser à gaz ;
en ce que les moyens d'alimentation électrique comportent des moyens (82) de mise en fonctionnement destinés à ioniser un gaz à l'intérieur du tube (2) à laser en réponse à un signal de tension et à un signal de commande de mise en fonctionnement ; et
en ce que les moyens à rétroaction analogiques comportent des moyens (78) générateurs de courant laser destinés à faire passer une impulsion de courant laser ayant une certaine amplitude dans le tube (2) à laser pendant une durée déterminée par un signal d'exposition de façon à faire en sorte que les moyens à laser génèrent une impulsion de faisceau de sortie laser, les moyens (6) de commande comportant des moyens destinés à générer le signal d'exposition et le signal de commande de mise en fonctionnement, et des moyens destinés à fournir le signal d'exposition aux moyens (78) générateurs de courant de laser et le signal de commande de mise en fonctionnement aux moyens (82) de mise en fonctionnement.

34. Système selon la revendication 33, caractérisé en ce que chaque impulsion de sortie laser a un temps de montée non supérieur à environ une demi-milliseconde, et un temps de descente beaucoup plus court qu'une demi-milliseconde.
